# EUROPÄISCHE PATENTANMELDUNG

(11) **EP 0 537 594 A2**
(43) Veröffentlichungstag der Anmeldung: **21.04.1993**
(21) Anmeldenummer: 92117023.9
(22) Anmeldetag: 06.10.1992
(51) Int. Cl.: B21D 5/08, B21D 5/02, F16L 23/14, B21D 19/04, B21D 39/03, F24F 13/02

(54) **Flanschverbindungsprofil, insbesondere für Lüftungskanäl-Anlagen**

(30) Priorität: 08.10.1991 CH 2968/91
(71) Anmelder: Lonoce, Cosimo, CH-8645 Jona (CH)
(72) Erfinder: Lonoce, Cosimo, CH-8645 Jona (CH)
(74) Vertreter: Troesch Scheidegger Werner AG

(57) **Zusammenfassung**

Für die Bildung eines Endflansches (3) an einer Endkante eines Blechteiles (9), um eine Stossverbindung mit einem analogen Endflansch an einem zweiten Blechteil zu ermöglichen, ist ein Flanschverbindungsprofil (3) vorgesehen, das durch eine an der einen Endkante längs verlaufende, aufgebogene, mit dem Blechteil (9) einstückig verbundene Randpartie (12) gebildet wird, welche ein im wesentlichen entlang der Endkante verlaufendes, geschlossenes Hohlprofil (5) aufweist.

Wesentlich für das Herstellen der Flanschverbindungsprofile ist, dass ein Blechband (21), an welchem entland einer Längsseite (22) das Profil herzustellen ist, entlang einer Strecke gezogen wird, wobei seitlich Biege- bzw. profilierrollen (31-41) angeordnet sind.

Ein alternatives nicht kontinuierliches Herstellverfahren wird gebildet durch ein Stanz- bzw Pressverfahren (71-75). Anwendung insbesondere zur Bildung von Anlagen im Lüftungsbau bzw. Lüftungskanäle.

## Beschreibung

Die vorliegende Erfindung betrifft ein Flanschverbindungsprofil gemäss dem Oberbegriff nach Anspruch 1, ein mit entlang einer Endkante einem Flanschverbindungsprofil versehenen Blechteil, einem geschlossenen, im wesentlichen einem rechteckigen oder quadratischen Querschnitt aufweisenden Kanalstück, insbesondere zur Bildung von Anlagen im Lüftungsbau bzw. von Lüftungskanälen, eine Flanschverbindung gemäss dem Oberbegriff nach Anspruch 7, ein Verfahren zur Bildung eines Flanschverbindungsprofiles gemäss dem Oberbegriff von Anspruch 9, ein weiteres alternatives Verfahren gemäss Anspruch 14, sowie eine Anlage gemäss dem Oberbegriff von Anspruch 15.

Es ist bekannt, Lüftungskanalabschnitte, die aus winklig gebogenen Blechtafeln gebildet sind, miteinander mittels Profilstücken zu verbinden, die je an einer Endpartie der Kanalwände befestigt werden und so ausgebildet sind, dass sie an den Kanalabschnitten Endflansche bilden, welche aneinandergestossen und durch Klammern oder auf andere Weise miteinander verbunden werden. Es ist ferner bekannt, die erwähnten Profilstücke im Querschnitt etwa L-förmig auszubilden mit einem am Kanalabschnitt zu befestigenden ersten Schenkel und einem dazu etwa rechtwinklig stehenden zweiten Schenkel, der dazu bestimmt ist, den Endflansch zu bilden. Im ersten Schenkel des Profilstückes ist eine sich in Richtung dieses Schenkels erstreckende Tasche zur Aufnahme der Endpartie einer Kanalwand vorgesehen, wobei gemäss dem Stand der Technik die Mündung dieser Tasche sich beim äussersten Ende des ersten Schenkels befindet. Um ein Abgleiten der Profilstücke von den Kanalwänden zu verhindern, hat man den ersten Schenkel jedes Profilstückes durch Punktschweissung oder Vernietung oder dgl. an der betreffenden Kanalwand befestigt und nachher die Schweiss- oder Nietstelle zum Korrosionsschutz mit Zinkfarbe überdeckt.

Da die Herstellung dieser Endflanschen sehr aufwendig war ist man dazu übergegangen, auf die Stirnkanten der Blechteile Flanschprofile aufzuschieben, wobei diese Flanschprofile im allgemeinen einen Einsteckschlitz umfassten, welche auf die Kanalseitenwände aufgesteckt werden konnten. Für die Befestigung zweier Kanalteilstücke müssen die Flanschprofile dabei zunächst über die Eckwinkelstücke miteinander und dann mit den Kanalseitenwänden verbunden werden. Danach werden die sich jeweils gegenüberliegenden Flanschprofile und Eckverbinder meist unter Zwischenlegung eines Dichtprofiles aneinander befestigt, was zur Verbindung der betreffenden Kanalteilstücke führt. Wie keiner näheren Erläuterung bedarf, ist diese Tätigkeit mit zahlreichen Handgriffen und darüber hinaus auch Schweissarbeiten verbunden. Dazu ist zu erwähnen, dass die auf den Kanalseitenwänden aufgesteckten Flanschprofile speziell hergestellt werden müssen, in die richtige Länge geschnitten werden müssen und anschliessend auf die Kanalseitenwände aufgesteckt. Nebst dem Arbeitsaufwand ist diese Art des Herstellens der Kanalteilstücke mit den endständigen Flanschprofilen auch sehr kostenintensiv.

Sowohl in der DE-OS 2 750 110 wie auch in der EP-O-0 135 602 werden Lösungen vorgeschlagen, welche wiederum von aufsteckbaren Flanschprofilen ausgehen, die auf die Kanalseitenwände endständig aufgesteckt werden müssen. Wohl wird in beiden zitierten Schriften ein vorteilhaft ausgebildetes Hohlprofil vorgeschlagen, das derart ausgebildet ist, dass ein Aufstecken auf eine Kanalseitenwand einfach und sicher erfolgen kann. Aber wie bereits oben erwähnt ist das separate Herstellen der Flanschenprofile teuer, und zudem müssen die Profile exakt entsprechend der Länge der Endkanten der Kanalseitenflächen zugeschnitten werden, damit ein dichtes Verbinden von zwei Kanalteilstücken möglich ist. Zudem müssen die zugeschnittenen Profile zu einem Rahmen zusammengesteckt werden, und anschliessend auf das Kanalendteil aufgesteckt, fixiert und verschweisst werden.

Entsprechend wird in der EP-A 197 466 und der AT-PS 383 516 vorgeschlagen, am Ende eines Kanalabschnittes mit ebenen Blechwänden bzw. zur Herstellung von Rohrleitungsschüssen,einstückig mit den Blechwänden bzw. den Rohrleitungen Verbindungsflanschen mit im wesentlichen hohlem Profil bzw. winkelförmige Hohlflansche anzuordnen. Damit ergibt sich der Vorteil, dass nicht die endständigen Verbindungsprofile auf Rohre oder Kanalwandungen aufzustecken sind, sondern durch eine einstückig mit diesen Blechteilen bzw. Rohrteilen verbundenen Randpartie gebildet werden. In der AT-PS 383 516 wird diesbezüglich ein Verfahren bzw. eine Anlage beschrieben, wie derartig einstückig mit einer Rohrwandung aufzubiegende, winkelförmige Hohlflanschen auszubilden sind. Wesentlich am erfindungsgemäss beschriebenen Verfahren ist, dass zur Verformung der Verbindungsflanschen an Blechzuschnitten für die Herstellung der Rohrleitungsschüsse Blechbahnen über eine Förderbahn geführt werden, welche in Abständen voneinander paarweise oben- und unterseitig angeordnete, zusammenwirkende Formwalzen aufweist, die angetrieben sind, um die Blechbahn durch die Anlage zu transportieren. Der Nachteil dieses Verfahrens bzw. dieser Anlage liegt darin, dass relativ grosse Förderwalzen zur Anwendung gelangen, und zudem immer gewährleistet werden muss, dass alle Formwalzen synchron angetrieben werden.

Es ist daher eine Aufgabe der vorliegenden Erfindung ein Verfahren bzw. eine Anlage vorzuschlagen, mit welcher ein Flanschprofil schnell, einfach und kostengünstig hergestellt werden kann, das seinerseits schnell, einfach und kostengünstig an einem Seitenkanalblechteil angeordnet werden kann, und mittels welchem sichere Verbindungen zwischen zwei Kanalstücken hergestellt werden können. Die erfindungsgemässe Aufgabe bezieht sich also vorzugsweise auf die Herstellung von Flanschenverbindungsprofilen, wobei das Profil durch eine an der einen Endkante längs verlaufende, aufgebogene, mit dem Blechteil einstückig verbundene Randpartie gebildet wird, welche ein im wesentlich entlang der Endkante verlaufendes, geschlossenes Hohlprofil aufweist.

Dieses entlang der Endkante des Blechteiles verlaufende Hohlprofil wird einerseits durch eine im wesentlichen senkrecht zum Blechteil an der einen Endkante längs ausgedehnt mit dieser verbundenen Stirnfläche für eine Stossverbindung mit einer analogen Stirnfläche am zweiten Blechteil, sowie durch eine von der Stirnfläche nach rückwärts zum Blechteil gebogenen Hohlprofilrückwand gebildet, welche sich bis auf das Blechteil zurückerstreckt.

Weitere bevorzugte Ausführungsvarianten von erfindungsgemäss herzustellenden Flanschverbindungsprofilen sind in den Unteransprüchen 8 bis 10 beschrieben.

Weiter wird ein mit entlang einer Endkante einem Flanschverbindungsprofil versehenes Blechteil gemäss dem Wortlaut nach Anspruch 11 vorgeschlagen.

Ein geschlossenes, im wesentlichen einen rechteckigen oder quadratischen Querschnitt aufweisendes Kanalstück, insbesondere zur Bildung von Anlagen im Lüftungsbau bzw. von Lüftungskanälen zeichnet sich durch den Wortlaut nach Anspruch 12 aus.

Die zwischen zwei aneinander stossenden Kanalstücken gebildete Flanschverbindung zeichnet sich aus durch den Wortlaut nach einem der Ansprüche 13 oder 14.

Zur Bildung der obgenannten Flanschverbindungsprofile entlang einer Endkante eines Blechteiles wird ein kontinuierliches Verfahren gemäss dem Wortlaut nach Anspruch 1 vorgeschlagen.

Das erfindungsgemäss vorgeschlagene Profilieren des Bandes mittels gleichzeitigem Biegen und Profilieren wird dadurch erreicht, indem Rollkörper und Festkörper bei der Bearbeitung des Bandes kombiniert werden. Die Rollkörper werden dabei durch Profilierkörper gebildet, währenddem der Festkörper durch eine seitlich von den Profilierkörpern angeordnete Formschiene gebildet wird. Das Biegen erfolgt entlang einer Längskante dieser Formschiene.

Wesentlich für das Herstellen der Flanschverbindungsprofile ist, dass ein Blechband, an welchem entlang einer Längsseite das Profil herzustellen ist, entlang einer Strecke gezogen wird, wobei seitlich Biege- bzw. Profilierrollen angeordnet sind, wobei in einem ersten Biegevorgang mittels seitlich über der einen Blechoberfläche angeordneten Rollen oder Walzen ein endständiger Streifen der Längsseite sukzessive um ca. 90° aufgebogen wird und in einem zweiten Biegevorgang ein endständiger Teil dieses Streifens durch seitlich über der anderen Blechoberfläche angeordneten Rollen oder Walzen um weitere, mehr als 90°, d.h. um einen Winkel im Bereich zwischen 90 und 180° in dieselbe Biegerichtung gebogen wird, bis dieser endständige Teil an der anderen Blechoberfläche an- bzw. aufliegt.

Weitere bevorzugte Ausführungen des erfindungsgemässen Verfahrens sind in den Unteransprüchen 2 bis 5 charakterisiert.

Ein alternatives nicht kontinuierliches Herstellverfahren zeichnet sich durch den Wortlaut nach Anspruch 6 aus.

Die oben erwähnten, erfindungsgemässen Flanschverbindungsprofile bzw. Flanschverbindungen, wie auch die Verfahren zu deren Herstellung eignen sich speziell für die Verwendung bei der Herstellung von Kanalstücken in Anlagen im Lüftungsbau bzw. von Lüftungskanälen, wie aber auch überall dort, wo endständig an ein flächiges Blechstück ein flanschartiges Profil angeordnet werden muss, um an ein entsprechendes Flanschteil eines anderen Blechstückes zum Verbinden der beiden Blechteile gestossen zu werden.

Weiter wird eine Anlage für das Erzeugen eines erfindungsgemässen Flanschverbindungsprofiles vorgeschlagen, das durch den Wortlaut gemäss Anspruch 15 gekennzeichnet ist.

Die erfindungsgemäss vorgeschlagene Anlage eignet sich insbesondere für die vorab vorgeschlagenen, erfindungsgemässen Verfahren gemäss dem Wortlaut nach einem der Ansprüche 1 bis 5, wobei insbesondere wesentlich ist, dass an der Anlage eine Zugvorrichtung für das Hindurchführen eines Blechbandes entlang einer Bearbeitungsebene vorgesehen ist. Der Vorteil des Ziehens des Blechbandes über die Bearbeitungsebene liegt vor allem darin, dass durch die Zugbewegung die seitlich angeordneten Bearbeitungswalzen bzw. Biegewalzen kleingehalten werden können, d.h. dass sie einen relativ kleinen Durchmesser aufweisen. Bei herkömmlichen, bekannten und im Stand der Technik beschriebenen Anlagen zum Biegen von Blechen werden sehr grosse Walzen verwendet, wobei der Grund darin liegt, dass bei diesen Anlagen das zu bearbeitende Blech nicht zuletzt durch Antrieb über die Bearbeitungswalzen entlang der Bearbeitungsebene transportiert wird. Anstelle des Ziehens ist es auch möglich, mittels einer Vorschubeinrichtung das Blechband durch die Bearbeitungsebene hindurchzustossen. Erfindungswesentlich ist primär, dass die für die Verformung verantwortlichen Teile der erfindungsgemässen Anlage nicht angetrieben sind.

Im Falle der erfindungsgemässen Anlage sind die Bearbeitungs- bzw. Biege- oder Falzwalzen freidrehend und nicht angetrieben, wobei es allerdings möglich ist entlang der Bearbeitungsstrecke sich im wesentlichen quer über die Bearbeitungsebene erstreckende Förderwalze anzuordnen, welche zusätzlich zur Zugwirkung das zu bearbeitende Blech entlang der Ebene transportieren.

Weitere bevorzugte Ausführungsvarianten der erfindungsgemässen Anlage sind im abhängigen Anspruch 16 charakterisiert.

Die Erfindung wird nun anschliessend, beispielsweise und unter Bezug auf die beigefügten Figuren näher erläutert.

Dabei zeigen:
- Fig. 1: in Perspektive ein Kanalteil, geeignet für das Herstellen von beispielsweise Lüftungskanälen,
- Fig. 2: ein erfindungsgemäss hergestelltes Flanschverbindungsprofil im Querschnitt,
- Fig. 3: eine Flanschverbindung im Querschnitt, wobei zwei Profile gemäss Fig. 2 aneinanderstossend angeordnet sind,
- Fig. 4: schematisch dargestellt und von oben gesehen eine Bearbeitungsebene einer erfindungsgemässen Anlage mit den seitlich angeordneten Bearbeitungswalzen,
- Fig. 5 bis 10: schematisch dargestellt anhand von Querschnittsansichten aus Fig. 4 den erfindungsgemässen Bearbeitungsablauf eines entlang der Bearbeitungsebene gemäss Fig. 4 geführten Bleches für die Herstellung der Flanschverbindungsprofile,
- Fig. 11 und 12: schematisch anhand von Querschnittsansichten analog denjenigen der Fig. 5 bis 10 dargestellt, wie eine kaltpressgefügte Verbindungsnut zwischen einem in Figur 10 geführten Blech und einem Randstreifen des Flanschverbindungsprofiles hergestellt wird, und
- Fig. 13 bis 15: schematisch dargestellt die erfindungsgemässe Herstellung eines Flanschverbindungsprofiles mittels einem Stanz- bzw. Presswerkzeug.

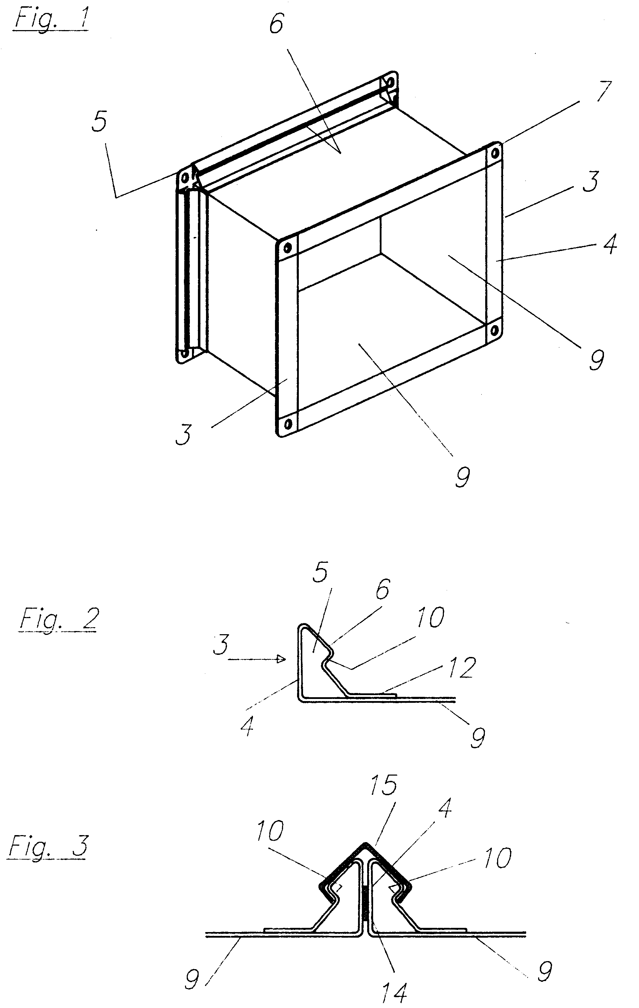

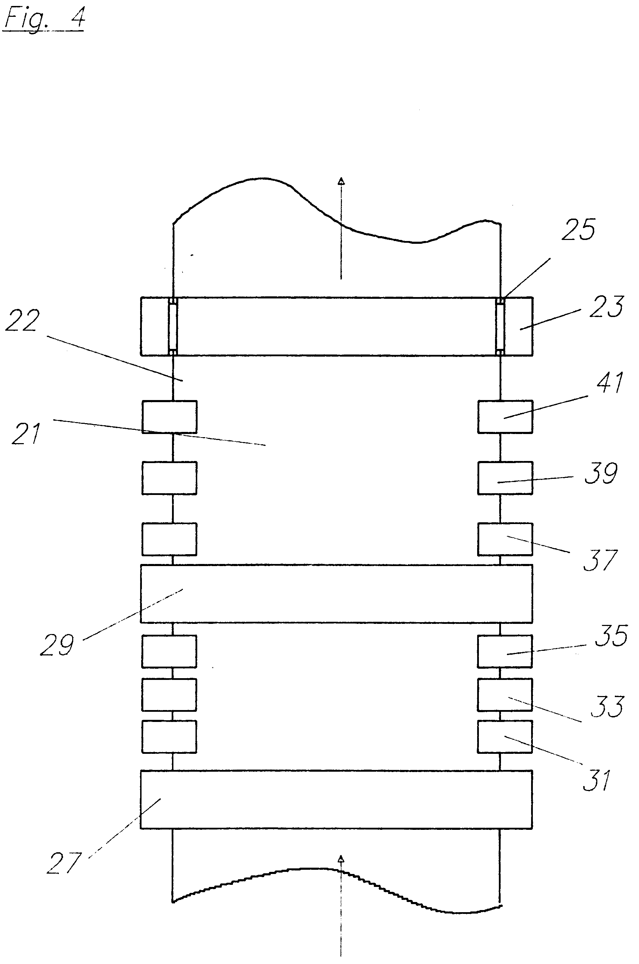

In Fig. 1 ist in Perspektive schräg von vorne ein Kanalstück 1 dargestellt, wie es normalerweise in der Lüftungstechnik zur Herstellung von Lüftungskanälen verwendet wird. Dabei werden mehrere derartige Kanalstücke 1 je stirnseitig miteinander verbunden, um entsprechend den Bedürfnissen einen längsausgedehnten, geschlossenen Kanal zu bilden. Für die Herstellung der Verbindung zweier derartiger Kanalstücke 1 sind je stirnseitig um die Oeffnung je vier Flanschen 3 angeordnet, welche beispielsweise nach herkömmlicher Methode auf die Endkanten je der Seitenkanalstücke 9 aufgesteckt werden. Erfindungsgemäss sind nun aber diese Flanschen 3 einstückig mit den Seitenkanalstücken 9 und bilden in Längsrichtung ausgedehnt je ein Hohlprofil 5. Dieses Hohlprofil 5 ist in Fig. 1 nur schlecht sichtbar, ist jedoch in den nachfolgenden Figuren noch besser sichtbar dargestellt. Die Flanschen 3 umfassen je eine Stirnfläche 4 für das Herstellen einer Stossverbindung zwischen zwei aneinandergefügten Kanalteile, sowie eine Flanschenrückwand 6, zwischen welchen beiden Flächen eingeschlossen, das Hohlprofil 5 ausgebildet ist. Für das beispielsweise schraub- oder vernietbare Verbinden zweier Kanalstücke sind je in den Ecken zwischen zwei Flanschen in die Hohlprofile 5 eingelassene Eckscheiben 7 vorgesehen, welche mittig beispielsweise ein Loch für das Einführen einer Schraube umfassen.

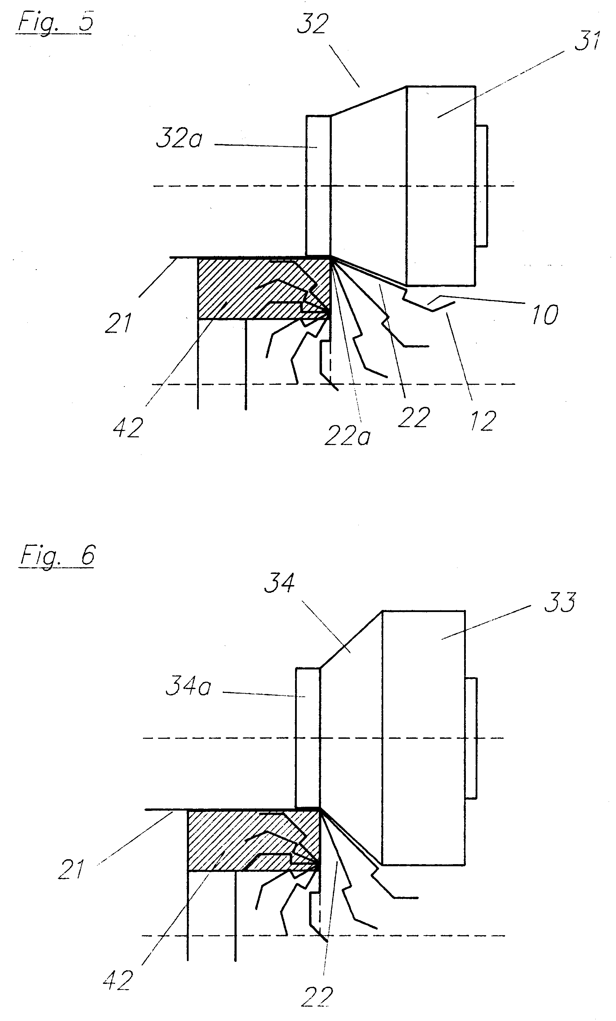

Fig. 2 zeigt im Querschnitt das Profil des Flansches 3 aus Fig. 1. Jedes Kanalseitenstück 9 bzw. Blechteil ist je endständig mit dem Flansch 3 versehen, der eine Stirn- oder Frontfläche 4 aufweist, welche ca. um 90° gegenüber dem Blechteil 9 aufgebogen ist. Rückseitig umfasst das Profil des Flansches 3 ein Rückwandteil 6, welches als Verlängerung der Stirnfläche 4 nach rückwärts gegen das Blechteil 9 gebogen ist und mit einer Randpartie 12 auf dem Blechteil 9 aufliegt. Diese Randpartie 12 ist vorzugsweise mit dem Blechteil 9 verbunden, wobei diese Verbindung eine punktuelle, streifenförmige oder flächige Verbindung sein kann, welche mittels Stanzen, Schweissen, Prägen, Kleben, usw., erzeugt werden kann. Weiter umfasst die Rückwand 6 einen Absatz bzw. eine Einkerbung 10, welche einwärts in Richtung zur Stirnfläche 4 ausgebildet ist. Auf deren Funktion wird mit Bezug auf Fig. 3 nachfolgend eingegangen. Eingeschlossen zwischen Stirnfläche 4, Rückwand 6 und einer Randpartie des Blechteiles 9 ist das Hohlprofil 5, welches, wie aus Fig. 1 ersichtlich, sich längs entlang der Endkante des Blechteiles 9 erstreckt.

In Fig. 3 ist eine gestossene Verbindung zwischen zwei Flanschteilen 3 von zwei Kanalseitenwänden 9 im Querschnitt dargestellt, wobei auf eine erneute Beschreibung der aneinanderstossenden Flanschprofile 3 verzichtet wird. Zwischen den beiden aneinanderstossenden Stirnflächen 4 ist vorzugsweise eine Dichtung 14 angeordnet, um eine dichte Verbindung zwischen zwei Kanalteilen zu ermöglichen resp. zu garantieren. Die beiden Flanschen 3 werden mittels einer Klammer 15 aneinandergepresst gehalten, wobei die Klammer 15 je die beiden Flanschen 3 hintergreift, indem sie je in den beiden Absätzen 10 eingreift. Das Anbringen derartiger Klammern 15 kann notwendig sein, wenn die Anpressung mittig entlang der längsausgedehnten Flanschen ungenügend ist, wenn zwei Kanalteile 1 nur mit den an den Ecken angeordneten Schraubverbindungen, wie in Fig. 1 erklärt, verbunden sind. Es ist aber auch möglich, gänzlich auf die Eckschraubverbindungen zu verzichten, und zwei Kanalteile 1 nur mit Klammern resp. Klemmverbindungen entlang der Flanschen aneinander zu halten.

Der Vorteil der Erfindung liegt nun darin, dass die Kanalteile relativ einfach und kostengünstig mit den Flanschen versehen werden können. Gemäss den herkömmlichen bekannten Methoden, gemäss welchen die Flanschen auf den Seitenwänden aufgesteckt werden mussten, war eine Arbeitszeit von ca. 8 - 10 Minuten notwendig, um ein Kanalteil vollständig mit Flanschen zu versehen. Erfindungsgemäss ist es nun möglich, indem die Flanschen einstückig mit den Kanalseitenwänden verbunden sind, die Wände bzw. Blechteile innerhalb einer Zeit von 30 Sek. mit einem Flansch zu versehen. Zudem ist der Arbeitsvorgang kontinuierlich, wie nachfolgend in bezug auf die Fig. 4 - 10 eingehender erläutert wird.

Auch hat es sich in der Praxis gezeigt, dass die erfindungsgemäss ausgebildeten Flanschenprofile ein dichteres Verbinden zweier Kanalteile ermöglichen. Zudem entfallen im Inneren des Lüftungskanales quer zum Lüftungskanal verlaufende Kanten, welche sich beim Aufstecken der Flanschen auf die Seitenwände ergeben. Eben diese Kanten sind aber Orte, wo sich Schmutz und Bakterien absetzen resp. einnisten können. Auch entfallen durch den Wegfall derartiger Kanten resp. durch die glatte Kanalinnenwand irgendwelche Lärmbildungen infolge von Strömungsturbulenzen.

In den Fig. 4 bis 10 wird nun schematisch dargestellt, wie die erfindungsgemässen Flanschenverbindungsprofile an den Blechen für die Bildung der Kanalseitenwände angeordnet werden.

Dabei zeigt Fig. 4 schematisch in Obendraufsicht den wesentlichen Ausschnitt einer Anlage für die Herstellung der erfindungsgemässen Flanschprofile, wobei dieser Teil eine Bearbeitungsebene umfasst, auf welcher in Längsrichtung ein zu bearbeitendes Blechband 21 mittels einer Zugvorrichtung 23 gezogen wird. Die schematisch dargestellte Zugvorrichtung 23 kann beispielsweise zwei Rollen umfassen, welche das Band 21 entlang der Bearbeitungsebene ziehen. Damit die schlussendlich ausgebildeten, seitlichen Flanschen durch diese Rollen nicht beschädigt werden, umfassen diese vorzugsweise im Bereich ihrer seitlichen Enden Einkerbungen 25, welche derart ausgestaltet sind, dass sie die Flanschenprofile aufnehmen können.

Entlang der Bearbeitungsebene ist es selbstverständlich möglich weitere Transportierwalzen 27 und 29 anzuordnen, wobei diese entweder frei drehend oder ebenfalls synchron mit der Zugrichtung 23 angetrieben sind. Wesentlich ist, dass das Blechband 21 entlang der ganzen Bearbeitungsebene weitgehendst in Längsrichtung unter Zugspannung steht.

Seitlich je entlang des Randbereiches 22 des Blechbandes 21 sind Rollen 31 bis 41 für das Bearbeiten bzw. Biegen dieser Randpartie 22 vorgesehen. Auf deren Funktionsweise wird in den Fig. 5 bis 10 näher eingegangen.

Dabei zeigen die Fig. 5 bis 10 je im Querschnitt eine dieser seitlich angeordneten Rollen 31 bis 41 und schematisch dargestellt deren Funktionsweise beim Auf- bzw. Umbiegen von Teilen des Randbereiches 22 des Blechbandes 21.

In Fig. 5 wird durch eine Rolle 31 mit einer konisch bzw. kegelförmig ausgebildeten Oberfläche 32 zunächst der Randbereich 22 des Blechbandes 21 um eine Knickkante 22a nach unten aufgebogen, wobei das Blechband 21 von unten durch einen Festkörper 42 stützend gehalten wird. Wie aus Fig. 5 erkennbar, ist der Randstreifen 22 des Blechbandes 21 bereits vorgeformt, wodurch der in bezug auf Fig. 2 und 3 beschriebene Absatz 10 und der Auflagerand 12 bereits vorgeformt sind. Um das Blech 21 sicher auf der Auflage 42 zu halten, umfasst die Rolle bzw. Walze eine zylindrische Kopfpartie 32a, die nahe der Kante 22a auf dem Blech 21 aufliegt.

Nun wird das Blechband zur nachfolgenden Rolle 33 mit der konischen Oberfläche 34 und dem Kopfteil 34a weitertransportiert, wodurch infolge des steileren Winkels des Konus bzw. Kegels der Randstreifen 22 des Blechteiles 21 noch stärker nach unten aufgebogen wird.

Bei Rolle 35, die keinen Konus mehr aufweist, sondern eine rechtwinklig zur Rollenoberfläche verlaufenden Stirnwand 36 wird das Aufbiegen des Randstreifens 22 des Bleches 21 bis zu einem Winkel von 90° zu Ende geführt.

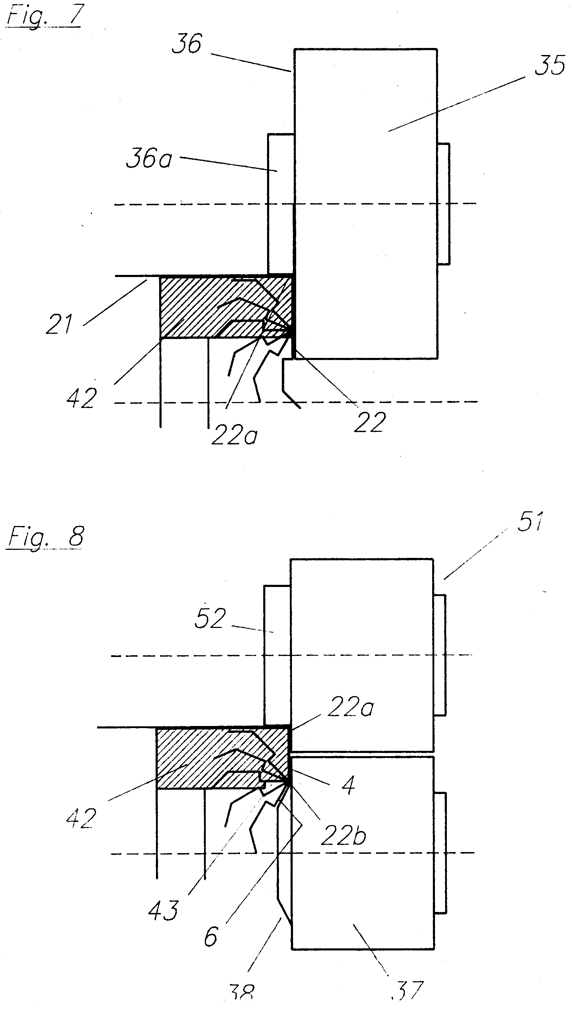

Nachdem sämtliche Rollen in den Fig. 5, 6 und 7 eine Rotations- bwz. Drehachse aufweisen, die oberhalb der Bearbeitungsebene bzw. des Bleches 21 angeordnet ist, ist nun die Drehachse aller nachfolgend beschriebener Rollen unterhalb der Bearbeitungsebene bzw. des Bleches 21 angeordnet. In Fig. 8 weist die Rolle 37 erneut eine konische Oberfläche 38 auf, mittels welcher nur ein Teil des Randstreifens 22, und zwar derjenige Teil, welcher die Rückwand 6 bilden wird, um die Kante 22b weiter rückwärts gebogen wird. Damit dieser Biegevorgang möglich ist, weist die Auflage 42 einen Absatz 43 auf, der zudem derart ausgebildet ist, dass derjenige Teil des Randstreifens 22 des Blechteiles 21 im 90°-Winkel zum Blechteil verbleibt, der die Stirnfläche 4 bilden wird. Damit das Blechteil 21 weiterhin fest auf der Bearbeitungsebene gehalten wird, ist weiterhin eine oberhalb der Bearbeitungsebene angeordnete Rolle 51 vorgesehen, mit einem Kopfteil 52, welches einen kleineren Durchmesser aufweist. Selbstverständlich wäre es möglich, anstelle dieser Rolle bzw. Walze 51, eine sich quer über die ganze Breite der Bearbeitungsebene verlaufende Walze anzuordnen.

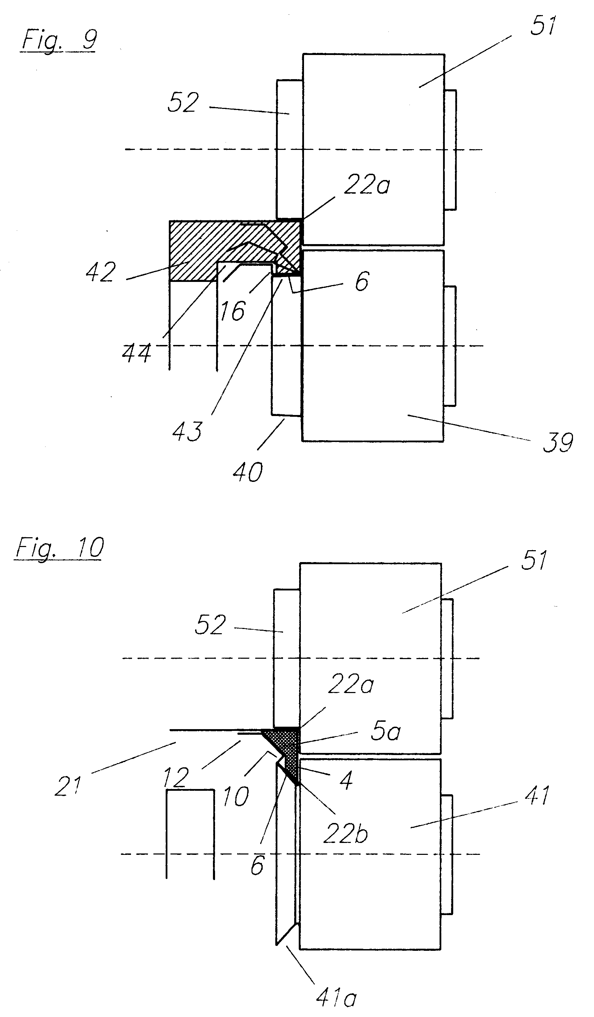

In Fig. 9 wird die Rückwand 6 durch die Rolle 39 mit dem Kopfteil 40 weiter rückwärts gegen das Blechteil gebogen, wobei die Unterlage 42 eine weitere Einkerbung 44 aufweist, damit ein ungehindertes Einwärtsbiegen der Rückwand 6 mit dem Absatz 10 gegen das Blechteil 21 möglich ist.

In Fig. 10 letztendlich wird der Rückwärtsbiegevorgang vollständig beendet, indem Rolle 41 ein Kopfteil 41a umfasst, welches einen invers nach aussen verlaufenden "Konus" aufweist. Im Bereich von Fig. 10 wird gänzlich auf die Auflage verzichtet, und für das Halten des Blechteiles 21 ist einzig eine Längsschiene 5a vorgesehen, welche in etwa im Hohlprofil 5 verläuft, und nach oben gegen das Kopfteil 52 der Halterolle 51 drückt. In Fig. 10 ist nun deutlich erkennbar, dass das hergestellte Flanschenprofil die Stirnfläche 4, die Rückwand 6, den Absatz 10 und die Randpartie 12 umfasst, wie es bereits aus Fig. 2 bekannt ist.

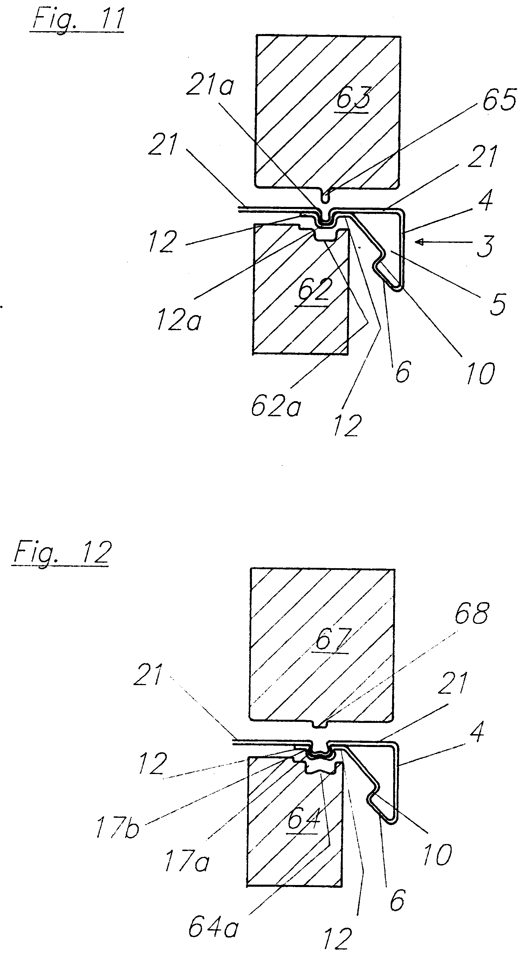

Die Randpartie 12 kann entweder mittels Kleben, Schweissen, Pressen, usw. mit dem Blechteil 21 verbunden worden, vorteilhaft aber hat sich nun das Ausbilden einer kaltpressgefügten Verbindungsnut erwiesen, deren Herstellung schematisch in den Fig. 11 und 12 beschrieben wird. Die Ausbildung einer derartigen kaltgefügten Nut kann beispielsweise nachfolgend dem letzten Biegevorgang im Bereich der Walze 41, vorgängig der Zugvorrichtung 23 gemäss Fig. 4 erfolgen. Gemäss Fig. 11 wird das Blech 21 mit dem seitlich erzeugten Flanschverbindungsprofil 3 zwischen zwei Walzen 62 und 63 hindurchgeführt, wobei die Walze 63 peripher eine vorspringende Erhebung 85 aufweist, und Walze 62 eine entsprechende kongruente Einkerbung 62a. Der Verbindungsbereich des Bleches 21 und der Randpartie 12 wird durch den Vorsprung 65 und die Einkerbung 62a entsprechend zum Blechteil 21a und zum Randstreifenabschnitt 12a profiliert.

Nachfolgend an den Vorgang gemäss Fig. 11 wird das so hergestellte Profil entsprechend der Darstellung in Fig. 12 zwischen zwei weiteren Walzen 67 und 64 geführt und kalt zur Längsnut 17 verpresst. Wie aus Fig. 12 erkennbar, weist die oben angeordnete Walze 67 an ihrer Peripherie einen Vorsprung 68 auf, währenddem die Walze 64 peripher eine Einkerbung 64a aufweist, welche mittig konvex ausgebildet ist, um gegen die Nut 17 zu drücken. Im Pressvorgang gemäss Fig. 12 wird mittels einem sogenannten Pressfügevorgang eine Nut erzeugt, welche seitlich die ausgedrückten Partien 17a und 17b aufweist, wobei die Partie 17a des Blechteiles die Partie 17b des Randstreifens hintergreift. Infolge Kaltfliessens der Materialien bildet die so hergestellte Nut 17 eine feste Verbindung zwischen dem Blechteil 21 und dem Randstreifen 12.

Anschliessend an die Herstellung des seitlichen Flanschenprofiles, welches vorzugsweise beidseitig des Blechbandes 21 erfolgt, muss das Blechband 21 nur noch quer zur Bearbeitungsebene in einzelne Segmente geschnitten werden, was nach bekannter und herkömmlicher Manier geschehen kann. Diese so hergestellten Blechbandsegmente entsprechen exakt den Kanalseitenwänden, wobei je nach Herstellart 1 bis 4 derartige Segmente zu einem Kanalteil zusammengefügt bzw. aufgebogen werden können. Zur Herstellung des Kanalteiles können also vier derartige Segmente aneinandergefügt, oder miteinander verschweisst werden, oder aber es ist möglich ein einziges Blechbandsegment vierfach je senkrecht zu den endständigen Flanschprofilen für die Herstellung des Kanalteiles um je 90° aufzubiegen. Selbstverständlich muss in diesem Fall in jedem Eckbereich das Flanschprofil unterbrochen werden. Da es in letzterem Fall nicht möglich ist, auf einfache Art und Weise eine Eckscheibe 7, wie in bezug auf Fig. 1 beschrieben, je seitlich in die Hohlprofile der Flanschen einzustecken, müssen zweiteilige Eckscheiben verwendet werden, welche sich mittig überlappen und beispielsweise je ein Loch aufweisen, um durch diese hindurch eine Schraubverbindung mit einem weiteren Flansch eines weiteren Kanalteiles zu ermöglichen.

Der Vorteil der Herstellung gemäss den Fig. 4 bis 12 liegt vor allem darin, dass das Ausbilden des Flanschenprofiles kontinuierlich erfolgen kann, und zudem keine Teile seitlich an das Blechband 21 aufgesteckt, aufgefügt oder aufgeschweisst werden müssen. Es versteht sich von selbst, dass diese Herstellweise eine wesentliche Kostenverminderung gegenüber der herkömmlichen Herstellung derartiger Flanschen mit sich bringt.

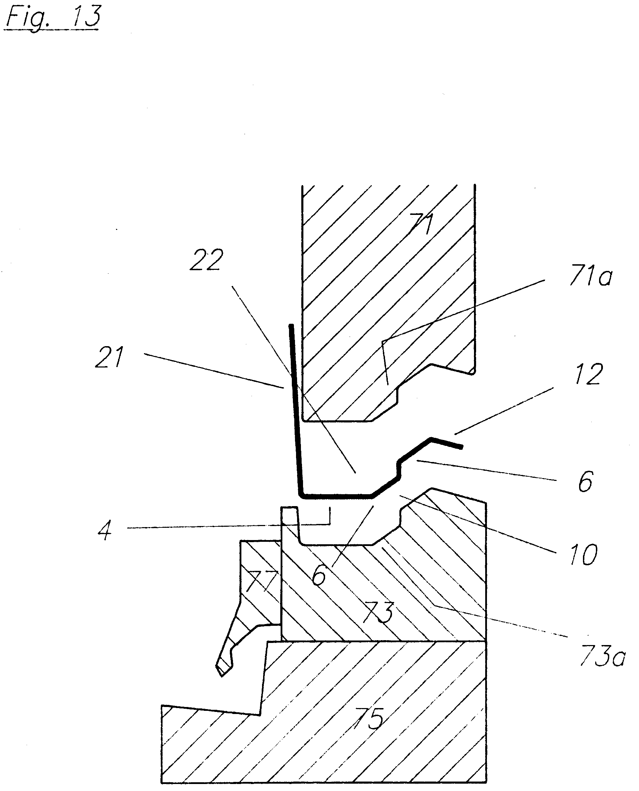

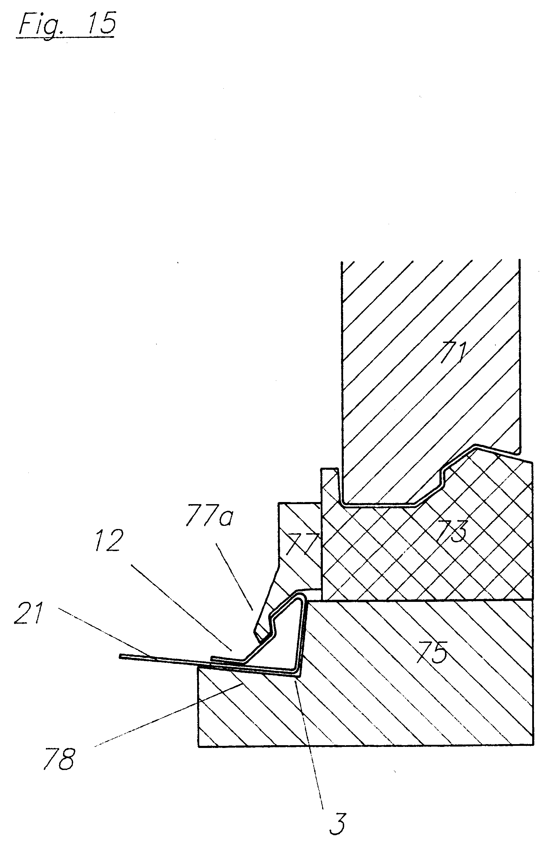

In den Fig. 13 bis 15 schlussendlich ist eine weitere Herstellvariante zum Ausbilden eines erfindungsgemässen Flanschverbindungsprofiles dargestellt, wobei diese Herstellung diskontinuierlich mittels einem Press- bzw. Stanzwerkzeug erfolgt.

In Fig. 13 wird ein Blechteil 21 mit einem Längsstreifen 22 zwischen zwei Presswerkzeuge 71 und 73 eingeführt, welche zwischenliegend eine Pressform bilden, umfassend eine Vaterkontur 71a und eine Mutterkontur 73a. Durch den Pressvorgang des Werkzeugteiles 71 in Pfeilrichtung gegen das Werkzeug 73 wird der Randstreifen 22 des Blechteiles 21 in die folgenden Abschnitte verpresst:
Stirnfläche 4, Rückwand 6, beinhaltend den Absatz oder Vorsprung 10, sowie der Randstreifen 12.

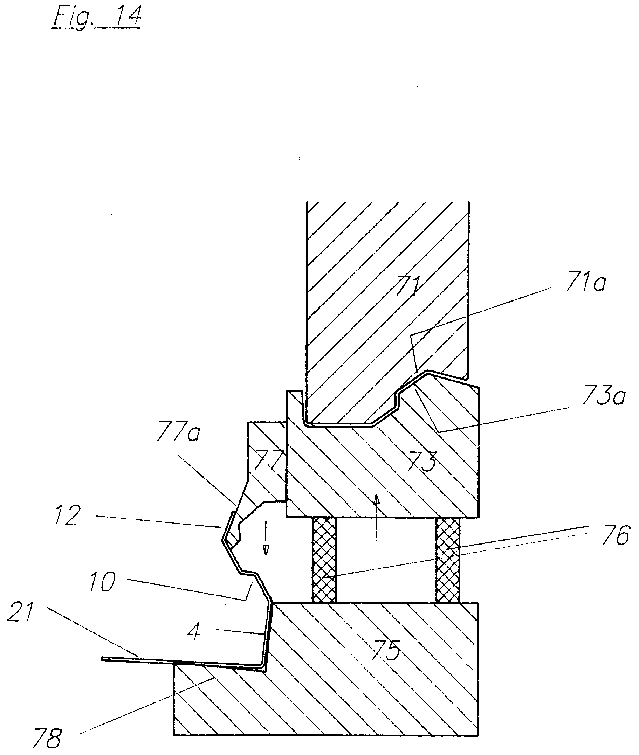

Nach der Verpressung des Randbereiches 22 des Bleches 21 wird dieses aus der Pressform entfernt und seitlich an einen weiteren Abschnitt 75 des Presswerkzeuges angelegt, wobei gleichzeitig der Presswerkzeugteil 73 zusammen mit dem Presswerkzeugteil 71 nach oben bewegt wird. Wie nun in Fig. 14 ersichtlich, wird nach der Aufwärtsbewegung der beiden Werkzeugteile 71 und 73 der Presswerkzeugteil 73 zusammen mit einem Abschnitt 77 wieder nach unten bewegt, wobei nun ein Vorsprung bzw. eine Nase 77a des Abschnittes 77 am gemäss Fig. 13 ausgebildeten, aufgebogenen Profil den Vorsprung 10 hintergreift, und sukzessive die Profilabschnitte gegen das Blechteil 21 hin bewegt, welches fest auf dem Sitz 78 des Werkzeugteiles 71 aufliegt. Die Auf- und Abwärtsbewegung der Werkzeugteile 71 und 73 erfolgt beispielsweise auf Führungsschienen 76.

Nach beendeter Abwärtsbewegung des Abschnittes 77, zusammen mit den Werkzeugteilen 71 und 73, sind die Profilabschnitte soweit nach unten gebogen, dass die Randpartie 12 auf dem Blechteil 71 aufliegt, und somit das erfindungsgemäss beschriebene Verbindungsflanschprofil 3 hergestellt ist. Wiederum kann der Randstreifen 12 mit dem Blechteil verschweisst, pressgefügt, verklebt, usw. werden.

Ob nun das erfindungsgemässe Flanschenverbindungsprofil kontinuierlich gemäss einer Anlage, dargestellt in den Fig. 4 bis 12, oder diskontinuierlich gemäss den Fig. 13 bis 15 erfolgt, hängt von verschiedenen Faktoren ab. So ist beispielsweise beim Herstellen nur einer relativ kleine Stückzahl von Blechteilen die Verwendung eines Presswerkzeuges vorteilhaft, ist doch die Herstellung eines Presswerkzeuges wesentlich günstiger als das Aufstellen einer Anlage gemäss den Fig. 4 bis 12. Bei Presswerkzeugen ist es zudem möglich schnell unterschiedliche Presswerkzeuge zu verwenden, um verschiedene Flanschenkonturen zu pressen. Demgegenüber weist aber eine kontinuierliche Anlage den Vorteil auf, dass Flanschenprofile wesentlich schneller und kostengünstiger herstellbar sind.

Die unter Bezug auf die Fig. 1 bis 15 beschriebenen Beispiele können selbstverständlich in x-beliebiger Art und Weise abgeändert, modifiziert oder variiert werden. So ist es selbstverständlich möglich, das sich bei der Herstellung des Flanschenprofiles ergebene Hohlprofil in irgendeiner anderen Weise auszugestalten. Auch kann das Hohlprofil derart sein, dass es L-förmig ist oder irgend eine andere geeignete Form einnimmt. Auch der beschriebene Absatz kann in x-beliebiger, anderer geeigneter Art und Weise ausgestaltet werden. Der wesentliche Punkt der vorliegenden Erfindung liegt darin, dass das erfindungsgemässe Flanschenverbindungsprofil einstückig mit dem entsprechenden Blechteil, resp. mit der entsprechenden Kanalseitenwand verbunden ist.

## Patentansprüche

1. Verfahren zur Bildung eines Flanschverbindungsprofiles an einer Endkante eines Blechteiles für die Bildung eines Endflansches, der eine Stossverbindung mit einem analogen Endflansch an einem zweiten Blechteil ermöglicht, wobei das Profil (3) durch eine an der einen Endkante längs verlaufende, aufgebogene, mit dem Blechteil (9) einstückig verbundene Randpartie gebildet wird, welche ein im wesentlichen entlang der Endkante verlaufendes, geschlossenes Hohlprofil (5) aufweist, dadurch gekennzeichnet, dass ein Blechband (21) entlang einer Bearbeitungsstrecke gezogen wird und entlang der oder beiden Längsseite(-n) (22) des Bandes das Profil mittels gleichzeitigem Biegen und Profilieren erzeugt wird, indem das Biegen entlang einer Längskante (22a) einer Unter- bzw. Auflage (42) erfolgt, auf oder unter welcher Auflage das Blech (21) entlang der Strecke gezogen oder gestossen wird und das Profilieren durch kegelstumpfartig ausgebildete Rollen oder Walzen (31, 33, 35, 37, 39, 41), welche seitlich dieser Längskante (22a) angeordnet sind.

2. Verfahren nach Anspruch 1, dadurch gekennzeichnet, dass das Blechband entlang der Strecke mit seitlich entlang der oder beiden Längsseite(-n) des Bandes (21) angeordneten Biege- bzw. Profilierrollen (31, 33, 35, 37, 39, 41) gezogen wird, wobei in einem ersten Biegevorgang mittels seitlich über der einen Blechoberfläche angeordneten Rollen oder Walzen (31, 33, 35) ein Randstreifen (22) der Längsseite um ca. 90° aufgebogen wird und in einem zweiten Biegevorgang ein endständiger Teil (6, 16, 12) dieses Randstreifens durch seitlich über der anderen Blechfläche angeordneten Rollen oder Walzen (37, 39, 41) um weitere mehr als 90° in dieselbe Biegerichtung gebogen wird, bis dieser endständige Teil an der anderen Blechfläche anresp. aufliegt.

3. Verfahren nach einem der Ansprüche 1 oder 2, dadurch gekennzeichnet, dass im ersten Biegevorgang das Aufbiegen des Streifens zur Bildung der Stirnfläche des Profiles erfolgt und im zweiten Biegevorgang das Rückwärtsbiegen zur Bildung der Rückwand, wobei nach Beendigung der beiden Biegevorgänge das Band in Segmente quer zur Transportrichtung geschnitten wird, zum Bilden der einzelnen Blechteile, dessen Endkanten mit den Flanschprofilen durch die gebogenen Randpartien der Längsseiten des in die Segmente unterteilten Bandes gebildet werden.

4. Verfahren nach einem der Ansprüche 1 bis 3, dadurch gekennzeichnet, dass der Randstreifen entlang der Längsseite des Blechbandes vorprofiliert ist und im Bereich des endständigen Teiles des Streifens einen längs verlaufenden Absatz aufweist, zur Bildung des entlang der Rückwand verlaufenden Absatzes bzw. der Einkerbung, sowie endständig am endständigen Teil einen derart angewinkelten Rand, dass beim zweiten Biegevorgang der endständige Teil mit seiner endständig verlaufenden Kante bzw. dem Rand flächig auf der anderen Blechfläche aufliegt, um durch Schweissen, Stanzen, Prägen, etc. mit der Blechfläche fest verbunden zu werden.

5. Verfahren nach einem der Ansprüche 1 bis 4, dadurch gekennzeichnet, dass der endständig flächig, auf dem anderen Blechteil (21) aufliegende Rand (12) des Profiles durch Pressfügen mit dem Blechteil unter Ausbilden einer längs ausgedehnten Pressnut (17) verbunden wird, wobei in einem ersten Schritt mittels einer Walze (63) in das Blech (21) und den aufliegenden Randstreifen (12) je U-förmige, ineinandergreifende Vertiefungen (12a, 21a) profiliert werden und in einem zweiten Schritt die U-förmigen Vertiefungen mittels Kaltpressen zu einer Nut ineinandergefügt werden, so dass ein Blechabschnitt (17a) der Nut einen entsprechenden Abschnitt (17b) des Randes hintergreift.

6. Verfahren zur Herstellung eines Flanschverbindungsprofiles an einer Endkante eines Blechteiles für die Bildung eines Endflansches, der eine Stossverbindung mit einem analogen Endflansch an einem zweiten Blechteil ermöglicht, wobei das Profil (3) durch eine an der einen Endkante längs verlaufende, aufgebogene, mit dem Blechteil (9) einstückig verbundene Randpartie gebildet wird, welche ein im wesentlichen entlang der Endkante verlaufendes, geschlossenes Hohlprofil (5) aufweist, dadurch gekennzeichnet, dass ein Blechteil (21) längs entlang einer Endkante (21a) verlaufend in einem Stanz- bzw. Presswerkzeug (71, 73, 75) zur Herstellung des aufgebogenen Profiles verpresst wird, wobei das aufgebogene Profil in unterteilte Abschnitte gepresst wird, entsprechend einer Stirnfläche (4), einer obigen Flanschprofilkante, einer gebogenen Profilrückwand (6), einem Absatz (10) in der Rückwand, sowie einem endständigen Randstreifen (12), und anschliessend das aufgebogene Profil mittels einem verschieblich am Presswerkzeug (73) angeordneten, und eine Nase (77a) aufweisenden Abschnitt (77) zu einem Hohlprofil, das Flanschverbindungsprofil (3) bildend, umgebogen wird, wobei die Nase (77a) den Absatz (10) hintergreifend am Rückwandabschnitt (6) eingreift, die Rückwand von der Stirnfläche (4) gegen das Blechteil hin wegbiegt, bis der endständige Randstreifen (12) am oder auf dem Blechteil (21) aufliegt, indem der Abschnitt mit der Nase (77a) gegen das Blech hin bewegt wird.

7. Flanschverbindungsprofil, hergestellt mittels einem Verfahren nach einem der Ansprüche 1 bis 6, an einer Endkante eines Blechteiles für die Bildung eines Endflansches, der eine Stossverbindung mit einem analogen Endflansch an einem zweiten Blechteil ermöglicht, dadurch gekennzeichnet, dass das Profil (3) durch eine an der einen Endkante längs verlaufende, aufgebogene, mit dem Blechteil (9) einstückig verbundene Randpartie gebildet wird, welche ein im wesentlichen entlang der Endkante verlaufendes, geschlossenes Hohlprofil (5) aufweist.

8. Flanschverbindungsprofil nach Anspruch 7, dadurch gekennzeichnet, dass das Profil eine im wesentlichen senkrecht zum Blechteil eine an der einen Endkante längs ausgedehnte, mit dieser verbundene Stirnfläche (4) umfasst, für die Stossverbindung mit einer analogen Stirnfläche am zweiten Blechteil, und eine von der Stirnfläche nach rückwärts zum Blechteil gebogene Hohlprofilrückwand (6), welche sich bis auf das Blechteil (9) erstreckt.

9. Flanschverbindungsprofil nach einem der Ansprüche 7 oder 8, dadurch gekennzeichnet, dass das Hohlprofil im wesentlichen durch einen Längsstreifen im Bereich und entlang der Endkante des Blechteiles, durch die Stirnfläche und durch die Hohlprofilrückwand gebildet wird, wobei die sich gegen das Blechteil erstreckende Rückwand (6) entlang der auf dem Blechteil auf- oder anliegenden Endkante (12) punktuell, entlang eines Streifens oder flächig mit dem Blechteil verbunden ist.

10. Flanschverbindungsprofil nach Anspruch 8 oder 9, dadurch gekennzeichnet, dass die Rückwand in Längsrichtung verlaufend einen gegen die Stirnfläche gerichteten Absatz (10) bzw. eine Einkerbung aufweist.

11. Mit entlang einer Endkante einem Flanschverbindungsprofil nach einem der Ansprüche 7 bis 10 versehenes Blechteil, dadurch gekennzeichnet, dass das Flanschverbindungsprofil durch eine einstückig mit der Endkante um ca 90° aufgebogene Stirnfläche (4), sowie einer endständig an der Stirnfläche, um mehr als weitere 90° rückwärts zum Blechteil hin gebogenen Hohlprofilrückwand (6) gebildet wird, welche Rückwand endständig im wesentlichen parallel zur Endkante des Blechteiles verlaufend am Blechteil auf- oder anliegt und mit diesem punkt, streifenförmig oder flächig verbunden ist, wodurch der Bereich des Blechteils entlang seiner Endkante, die Stirnfläche und die Rückwand ein längsverlaufendes Hohlprofil (5) bilden.

12. Geschlossenes, im wesentlichen einen rechteckigen oder quadratischen Querschnitt aufweisendes Kanalstück, insbesondere zur Bildung von Anlagen im Lüftungsbau bzw. von Lüftungskanälen, gekennzeichnet durch vier Blechteilwandungen (9) mit je mindestens einem Flanschverbindungsprofil (3) nach einem der Ansprüche 7 bis 10, bzw. mit ein bis vier Blechteilen nach Anspruch 5, wobei die Blechteilwandungen zur Bildung eines Kanales je entlang ihrer beiden, je senkrecht zu den beiden Endkanten verlaufenden Seitenkanten miteinander verbunden sind.

13. Flanschverbindung zwischen zwei aufeinanderstossenden Kanalstücken nach Anspruch 12, dadurch gekennzeichnet, dass die beiden durch je vier Flanschenverbindungsprofile gebildeten Endflanschen je mit ihren Stirnflächen aufeinanderliegend angeordnet sind, mit vorzugsweise einer dazwischen angeordneten Dichtung (14), wobei die beiden Endflansche durch Haltemittel (7, 15) aneinandergehalten, bzw. aufeinandergepresst, angeordnet sind.

14. Flanschverbindung nach Anspruch 13, dadurch gekennzeichnet, dass die Flanschen mittels Klemmvorrichtungen (15) aneinanderstossend gehalten werden, wobei die Klemmvorrichtungen je in eine Einkerbung oder einen Absatz (10) in der Rückwand eingreifend die beiden Flanschen hintergreifen und so spannend zusammenpressen.

15. Anlage für das Durchführen des Verfahrens nach einem der Ansprüche 1 bis 5, für das Erzeugen eines Flanschverbindungsprofiles entlang einer Endkante eines Blechteiles, dadurch gekennzeichnet, dass
- eine Bearbeitungsebene vorgesehen ist, entlang welcher ein Blechband (21) an seinen Längskanten bearbeitet wird, und
- eine Zugvorrichtung (23) am Ende der Bearbeitungsebene, für das Ziehen des Blechbandes entlang der Bearbeitungsebene, sowie
- je seitlich an der Bearbeitungsebene mehrere Bearbeitungswalzen bzw. -rollen (31, 33, 35, 37, 39, 41), für das Bearbeiten der seitlichen Längskanten des Bleches, wobei ein Teil der Walzen oder Rollen entlang eines ersten Abschnittes der Bearbeitungsebene seitlich auf bzw. über der einen Fläche der Ebene angeordnet ist für das sukzessive Aufbiegen eines Randstreifens entlang der Seitenkante bis zu ca. 90° in Richtung von den Rollen weg, und der andere Teil der Rollen seitlich auf bzw. über der anderen Fläche der Ebene, um ein endständiges Randteil des Randstreifens in gleicher fortgesetzter Biegerichtung einwärts und gegen die Ebene gerichtet, sukzessive um weitere mehr als 90° weiterzubiegen, bis die Endkante dieses Randteiles auf der anderen Fläche des Bleches, das auf der Bearbeitungsebene transportiert wird, an- bzw. aufliegt.

16. Anlage nach Anspruch 15, dadurch gekennzeichnet, dass entlang der Bearbeitungsebene und quer dazu verlaufend Führungs- bzw. Transportwalzen (27, 29) vorgesehen sind, die entweder frei drehend sind oder synchron mit der Zugvorrichtung angetrieben sind.
